# EUROPÄISCHE PATENTSCHRIFT

(11) **EP 2 677 287 B1**
(45) Veröffentlichungstag und Bekanntmachung des Hinweises auf die Patenterteilung: **13.03.2019**
(21) Anmeldenummer: 12173020.4
(22) Anmeldetag: 21.06.2012
(51) Int. Cl.: G01G 23/00, B67C 11/02, B65B 1/32

(54) **Wägehilfe**
Weighing aid
Assistant de pesage

(43) Veröffentlichungstag der Anmeldung: 25.12.2013
(73) Patentinhaber: Mettler-Toledo GmbH, 8606 Greifensee (CH)
(72) Erfinder: Ehrbar, Sandra, 8605 Gutenswil (CH); Buchmann, Alice, 8340 Hinwil (CH); Meyer, Michael, 8905 Islisberg (CH)
(74) Vertreter: Mettler-Toledo

(56) Entgegenhaltungen:
- US-A- 952 313
- US-A- 3 169 643
- US-A- 4 332 282
- US-B1- 6 179 022

## Beschreibung

Die vorliegende Erfindung bezieht sich auf eine Wägehilfe, die zum Abwiegen einer Substanz und zum Transfer der Substanz in einen Messkolben oder in ähnliche im Labor verwendete Gefässe bei der Herstellung von Lösungen verwendet wird. In Einfüllposition wird eine Substanz in der Wägehilfe aufgelegt und die Wägehilfe wird mit der Substanz gewogen. In Abflussposition wird der Transfer der Substanz in den Messkolben ermöglicht.

Wägehilfen werden typischerweise im Labor zur Herstellung von Lösungen verwendet.

Lösungen sind typischerweise Gemische aus mindestens einer Flüssigkeit und mindestens einer festen Substanz die in der mindestens einer Flüssigkeit gelöst ist. Die Konzentration einer Lösung ist der Mengenanteil in der Lösung, mit dem eine Substanz in der mindestens einer Flüssigkeit gelöst ist. Damit eine Lösung einen genauen Gehalt einer Substanz enthält, sollen die Menge Lösung und die Menge Substanz genau gemessen werden. Im Labor wird die Menge Lösung üblicherweise durch ihr Volumen gemessen und die Menge Substanz wird gewogen. Die übliche Art, ein Volumen zu messen wird durch einen Messkolben ermöglicht. Der Messkolben ist eine Flasche mit einem Bauch und einem langen Hals. Er besitzt eine Volumenmarkierung um seinen Hals der das vorgegebene Volumen bestimmt, z.B. 100ml. Der Messkolben weist einen Stopfen auf, der in den Messkolbenhals angebracht wird. Der Abschnitt des Messkolbenhals, der in Kontakt mit dem Stopfen ist, ist geschliffen und heisst der Schliff. Der Schliff dient zum Dichten des Stopfens beim Schütteln und trägt somit zu einem minimalen Lösungsverlust bei.

Die Substanz hingegen wird gewogen, deshalb wird sie auch als Wägegut bezeichnet. Dazu wird zuerst ein Gefäss auf einer Waage gelegt und die Waage wird anschliessend tariert. Danach wird die gewünschte Menge Substanz ins Gefäss eingewogen. Wenn das Gefäss die gewünschte Menge der Substanz enthält, wird es über den Messkolben gehalten und derart mit Hilfe einer Spritzflasche mit der Flüssigkeit gespült, so dass die Substanz vollständig in den Messkolben abfliesst. Nachdem die Substanz in ihrer Gesamtheit in den Messkolben überführt ist, in der Flüssigkeit aufgelöst ist, die Flüssigkeit auf die Volumenmarkierung aufgefüllt ist, sowie homogenisiert wurde, liegt eine homogene Lösung vor.

Herkömmlicherweise wird ein aus einem Pergamentblatt bestehenden Papier-Wägeschiffchen als Gefäss verwendet. Dem faltbaren Pergament-Blatt kann eine gewünschte Form gegeben werden. Üblicherweise wird durch das Falten ein Aufnahmegefäss mit einem Boden und tiefen Seiten gebildet. Für das Deponieren und das Abwiegen der Substanz ist das Papier-Wägeschiffchen sehr handlich. Das Transferien der Substanz hingegen ist schwieriger. Durch das leichte Gewicht und die Biegsambarkeit des Papier-Wägeschiffchens wird Sorgfältigkeit verlangt, um es geschickt und präzis zu handhaben. Beim Einfüllen der Substanz in den Messkolben kann es schnell aus den Händen rutschen oder zerquetscht werden.

Üblich ist auch der Gebrauch von biegsamen Wägeschiffchen aus Kunststoff, beispielsweise aus Polystyrol. Sie sind auf dem Markt in Rechteck-, Rauten-, und Hexagon-Form erhältlich. Sie weisen einen breiten Boden und niedrige abgeschrägte Seiten auf. Dank ihres flachen Bodens liegen sie sehr stabil auf einer flachen Fläche zum Ausfüllen und zum Wiegen der Substanz. Sie haben den Vorteil, biegsam zu sein, was beim Transfer in den Messkolben die Kanalisierung des Abflusses der Substanz ermöglicht. Doch sind sie wie die Papier-Wägeschiffchen so leicht und biegsam, dass leicht Substanz verschüttet werden kann.

US 6'179'022 offenbart ein Gefäss in Form eines Wägetrichters. In dieser Schrift ist er aus Kunststoff gefertigt. Bekannt sind auch ähnliche Wägetrichter aus Glas. Er besteht aus einem Auffnahmegefäss mit einer Öffnung zum Einfüllen der Substanz, das mit einem Hals mit einer Öffnung zum Abfluss der Substanz aus dem Wägetrichter verbunden ist. Eine Ausführungsform des Wägetrichters weist eine flache Fläche auf dem Auffnahmegefäss, parallel zur Halsachse auf, um das Auflegen der Substanz zu erleichtern. Der Transfer der Substanz in den Messkolben ist zwar mit dem Wägetrichter sicherer als mit den bestehenden Wägeschiffchen. Ein Nachteil des Wägetrichters besteht jedoch darin, dass er wegen der ungenügenden Grösse der flachen Fläche leicht rollen kann und/oder durch den Hals ausser Gleichgewicht gebracht werden kann. Die Stabilität solcher Wägetrichter kann denn beim Einfüllen und Wiegen nicht gesichert werden.

Ein weiterer Nachteil vom bekannten Wägetrichter ist sein kurzer und enger Hals. Durch den engen Aussendurchmesser des Halses des Wägetrichters sitzt der Wägetrichter nicht stabil im Messkolbenhals. Der Wägetrichter wackelt im Messkolben. Dies macht das Spülen des Wägetrichters mit dem Flüssigkeitsstrahl unhandlich und erhöht das Risiko von Substanzverlust.

Die kurze Länge des Wägetrichterhalses führt auch zu einem Substanzverlust in dem die Substanz beim Abfliessen in den Messkolben in Kontakt mit dem Schliff kommt und ein Bruchteil davon zwangsläufig an dieser Stelle bleibt. Demnach bleiben beim Schütteln der Lösung die Partikel Substanzen zwischen dem Schliff und dem Stopfen und verursachen dadurch einen Substanzverlust. Somit resultiert eine falsche Konzentration.

Entscheidend für die Genauigkeit der Konzentration der Lösung ist, dass am Ende der Handhabung die Gesamtheit der gewogenen Substanz in die Flüssigkeit transferiert wird. Demnach darf die Substanz weder im Gefäss noch zwischen dem Schliff und dem Stopfen liegenbleiben.

Es ist somit Aufgabe der vorliegenden Erfindung, eine Wägehilfe zu schaffen, die das Wiegen und das Transferieren eines Wägeguts in einen Messkolben mit einem minimalen Verlust von Wägegutmengen und einer möglichst bequemen und sicheren Handhabung ermöglicht.

Diese Aufgabe wird mit einer Vorrichtung und einem Verfahren gelöst, welche die in den unabhängigen Patentansprüchen angegebenen Merkmale aufweisen. Weitere vorteilhafte Ausführungsformen können den abhängigen Ansprüchen entnommen werden.

Die Erfindung betrifft eine Wägehilfe mit einem Aufnahmegefäss und einem an dem Aufnahmegefäss angeordneten Hals, die in Einfüllposition das Einfüllen eines Wägeguts ins Aufnahmegefäss ermöglicht und in Abflussposition das Abfliessen des im Aufnahmegefäss befindlichen Wägeguts durch den Hals ermöglicht. Das Aufnahmegefäss weist eine Aufnahmegefässaussenseite, eine in der Aufnahmegefässaussenseite enthaltene Auflagefläche und eine Einfüllöffnung zum Einfüllen eines Wägeguts in Einfüllposition auf, wobei in Einfüllposition die Wägehilfe auf der Auflagefläche aufliegt. Der Hals weist an einem ersten Ende eine Durchflussöffnung zum Durchfluss des Wägeguts vom Aufnahmegefäss in Abflussposition, und an einem zweiten Ende eine Abflussöffnung zum Abfluss des Wägeguts aus dem Hals in Abflussposition auf. Die Abflussöffnung ist tiefer als der Normschliff angeordnet, wenn die Wägehilfe in einem Messkolben mit Normschliff in Abfüllposition sitzt. Der Hals und das Aufnahmegefäss sind derart miteinander verbunden, dass zwischen Einfüllposition und Abflussposition das Wägegut vom Aufnahmegefäss über die Durchflussöffnung durch den Hals fliessen kann. Der Hals weist mindestens einen Auflagepunkt in der gleichen Ebene wie die Auflagefläche des Aufnahmegefässes auf, so dass in der Einfüllposition die Wägehilfe auf der Auflagefläche und dem mindestens einem Auflagepunkt aufliegt.

Das Aufnahmegefäss weist eine Aufnahmegefässinnenseite auf. Die Aufnahmegefässinnenseite weist einen Boden zum Auflegen des Wägeguts auf. Um den Boden ist eine umkreisende Fläche angeordnet, und der Boden bildet mit der umkreisende Fläche stumpfe Winkel.

Der Boden liegt im Wesentlichen gegenüber der Auflagefläche des Aufnahmegefässes. Idealersweise betragen diese Winkel zwischen 100° und 140°. Vorteilhaft bei dieser Anordnung ist, dass die Wägehilfe stabil auf einer flachen Fläche beispielsweise auf einem Tisch oder auf einer Waage liegen kann. So bleibt die Wägehilfe stabil auf der Fläche und auf dem Auflagepunkt 11, ohne Risiko weder auf die Seiten noch nach hinten zu kippen. Zudem, dadurch, dass die Wägehilfe so stabil liegt, wird beiden Händen freien Raum gelassen, um die Wägehilfe zu füllen. Das Wägegut kann eine wertvolle, gefährliche oder sogar giftige Substanz sein. Daher soll schon beim Einfüllen der Wägehilfe geachtet werden, dass der Verlust minimal gehalten wird, und/oder dass der Wägegut nicht mit der Benutzerhaut in Kontakt kommt.

Besonders bevorzugt wird eine Wägehilfe die nicht nur einen Auflagepunkt sondern eine Auflagefläche auf dem Hals in der gleichen Ebene wie die Auflagefläche des Aufnahmegefässes aufweist. Diese Ausführungsform hat den Vorteil noch stabiler zu sein. Idealerweise ist die Auflagefläche auf dem Hals derart angeordnet, dass die Breite der Abflussöffnung minimal reduziert wird.

Vorzugsweise bildet die Ebene der Auflagefläche einen spitzen Winkel mit der Achse des Halses in der Richtung des Halses. Der spitze Winkel erleichtert den Zugang der spülenden Flüssigkeit in Abflussposition zum Boden des Aufnahmegefässes. Aus dem Stand der Technik bekannte Wägehilfen weisen eine Auflagefläche und einen Hals auf, die parallel zu einander ausgerichtet sind. Dies bedeutet, dass die Auflagefläche des Aufnahmegefässes in Abflussposition vertikal ausgerichtet ist. Wegen dem kleinen Winkel zwischen den gebogenen Hals einer Spritzflasche und der Auflagefläche bzw. dem Boden des Aufnahmegefässes kann die Wägehilfe nicht effizient gespült werden. Idealerweise beträgt dieser Winkel zwischen 20° und 40°. Infolgedessen wird der Boden der Wägehilfe mit einem Winkel von ca. 60°-90° bespritzt, was ein direktes, handliches und effizientes Spülen ermöglicht.

In einer vorteilhaften Ausführungsform hat die Neigung der tangentialen Ebenen in jedem Punkt der Fläche der Wägehilfe in Bezug auf die Achse stets die gleiche Polarität, oder sie ist null. Mit anderen Worten entweder kreuzen die tangentialen Ebenen in jedem Punkt der Fläche der Wägehilfe die Achse des Halses in die gleiche Richtung, oder sie sind parallel zur Achse des Halses. Demnach weist die Form keine Vorsprünge auf, die in einer einstückigen Spritzgussform stecken bleiben könnten. Diese Merkmale ermöglichen die Wägehilfe durch Spritzguss mit einer Spritzgussform ohne Querschieber herzustellen. Dementsprechend kann der Guss schnell und ohne Schwierigkeit aus der Form genommen werden, ohne dass die Wägehilfe Biegungen unterliegt. Zudem wird die Herstellung effizienter und somit günstiger.

Besonders vorteilhaft ist es, dass das Aufnahmegefäss wesentlich breiter als der Hals ist. Idealerweise ist das Aufnahmegefäss zwei Mal breiter als der Hals an seinem breitesten Durchmesser. Dieses Verhältnis ermöglicht eine gute und bequeme Handhabung beim Einfüllen sowie beim Spülen der Wägehilfe.

Günstig wirkt sich dabei aus, die Einfüllöffnung so auszustatten, dass sie so breit wie das Aufnahmegefäss ist. Auf diese Art hat der Benutzer Raum, um seine Utensilien in Einfüllposition über den Boden zu handhaben, wenn er das Wägegut in die Wägehilfe auflegt. Zudem erleichtert eine solche Einfüllöffnung das Spülen der Wägehilfe in Abflussposition.

Besonders vorteilhaft dabei ist, dass das Aufnahmegefäss die Form einer breiten und offenen Schale hat. Dementsprechend ist die Wägehilfe in Abflussposition einfach zu spülen. Der Flüssigkeitsstrahl der Spritzflasche kann ohne Schwierigkeit den Boden und die umkreisende Fläche erreichen. Zudem braucht die Spritzflasche praktisch nicht gedreht zu werden, damit der Flüssigkeitsstrahl direkt gegenüber der Fläche des Bodens und der umkreisenden Fläche d.h. mit einer ca. 90° Winkel bespritzt.

Ausserdem können das Aufnahmegefäss und die Durchflussöffnung derart ausgestattet werden, dass die Durchflussöffnung sich auf einer Höhe A über dem Niveau des Bodens befindet, und dass dadurch das Wägegut in Einflussposition nicht vom Aufnahmegefäss durch den Hals fliessen kann. Für flüssige Wägegute ist diese Variante besonders vorteilhaft da sie das Risiko von Substanzverlust beim Wechsel von der Einfüllposition in die Abflussposition vermindert.

In einer weiteren Ausführungsform der Wägehilfe ist die Einfüllöffnung derart ausgestattet, dass die Projektion der Einfüllöffnung den Boden überlappt. Dieses Merkmal bietet dem Benutzer den Blick auf seine Handhabung. Zudem ermöglicht es ihm das Wägegut auf den Boden von oben aufzulegen.

Die oben eingeführten Merkmale tragen dazu bei, den Verlust von Wägegutmengen beim Einfüllen der Wägehilfe und beim Wiegen des Wägeguts einzuschränken. Auch beim Transfer des Wägeguts von der Wägehilfe in den Messkolben besteht das Risiko, Mengen vom Wägegut zu verlieren. Zum Beispiel, Mengen des Wägeguts die mit dem Schliff in Kontakt kommen werden nach dem Zustöpseln des Messkolbens nicht durch die Flüssigkeit gespült.

Dadurch dass die Abflussöffnung vorzugsweise tiefer als der Normschliff angeordnet ist, wenn die Wägehilfe in einem Messkolben mit Normschliff in Abfüllposition sitzt,kommt das Wägegut beim Abfluss nicht in Kontakt mit dem Normschliff.

Der Hals der Wägehilfe kann konisch oder/und zylindrisch sein. Er kann eine oder mehrere Verjüngungen aufweisen, d.h. er muss nicht stetig sein. Er kann konische und/oder zylindrische Abschnitte aufweisen.

Der Normschliff eines Messkolbens gemäss der DIN 12664 Norm beträgt eine Neigung von 1:10. Daher ist es besonders vorteilhaft die Wägehilfe mit einem konischen Hals auszustatten, der eine Neigung von 1:10 beträgt, so dass sich der Hals in Abfüllposition dem Normschliff anschmiegt.

Ein weiterer Vorteil der erfindungsgemässen Wägehilfe besteht darin, dass der Hals mindestens zwei Abschnitte mit einer Neigung von 1:10 aufweist. Die Abschnitte weisen unterschiedliche Durchmesser auf und sind durch eine Stauchungsregion verbunden. Dank der Stauchungsregion ist die Halslänge beschränkt. Eine solche Wägehilfe kann auf Messkolben von unterschiedlichen Normschliffgrössen eingesetzt werden. Bei Anwendung in Abfüllposition auf einem breiten Messkolben mit breitem Durchmesser kommt der Hals der Wägehilfe nicht mit der im Messkolben enthaltenen Flüssigkeit in Kontakt.

Ausserdem kann die Wägehilfe mit einem Griff ausgestattet sein. Vorteilsweise ist der Griff am Aufnahmegefäss, z.B. am gegenüberliegenden Ende der Abflussöffnung angeordnet.

Darüber hinaus sieht die Erfindung ein Verfahren vor, wobei ein Wägegut in einer in Einfüllposition angeordnete Wägehilfe eingefüllt wird, und wobei anschliessend die Wägehilfe in Abfüllposition mit dem Hals in der Öffnung eines Messkolbens aufgestellt wird, derart dass das Wägegut in den Messkolben abfliesst.

Das Aufnahmegefäss kann eine, am gegenüberliegenden Ende der Abflussöffnung abgerundete, Einfüllöffnung aufweisen. Eine solche Ausführungsform stellt den Vorteil dar, eine grössere Aufnahmegefässinnenseite und/oder einen grösseren Boden aufzuweisen.

Das Aufnahmegefäss kann auch eine, am gegenüberliegenden Ende der Abflussöffnung spitzförmige, Einfüllöffnung aufweisen.

Für Wägegut die aus Pulver bestehen, eignet sich besonders eine Wägehilfe mit einer abgeschrägten Abflussöffnung. Für flüssige Wägegut hingegen wird eine zur Achse des Halses senkrechte Abflussöffnung verwendet.

Die Wägehilfe kann aus Glas sein. Dennoch sind Einweg-Wägehilfen meistens aus Kunststoff. Typischerweise werden Polypropylen, Polyethylen und/oder Polystyrol verwendet.

Der Verlust von Wägegutmengen kann auch dadurch vermindert werden, dass für die Wägehilfe aus anti-statischem Material hergestellt wird.

Die Wägehilfe und das Verfahren zum Abfüllen eines Wägeguts in einen Messkolben werden anhand von Beispielen, wie sie schematisch in den Zeichnungen dargestellt sind, im Folgenden beschrieben. Es zeigen:
- Fig. 1: Eine Schnittdarstellung der erfindungsgemässen Wägehilfe in Einfüllposition auf der Achse des Halses senkrecht zur Ebene der Auflage Fläche des Aufnahmegefässes;
- Fig. 2: Eine Draufsicht der Wägehilfe in Einfüllposition;
- Fig. 3: Eine Perspektivdarstellung der Wägehilfe in Einfüllposition;
- Fig. 4: Eine Seitenansicht der in einem Messkolben eingeführten Wägehilfe in Abfüllposition;
- Fig. 5: Die in einem Messkolben eingeführten Wägehilfe in Abfüllposition beim Spüllen mit einer Spritzflasche; und
- Fig. 6: Eine Draufansicht einer zweiten Ausführungsform der erfindungsgemässen Wägehilfe mit einem Griff.

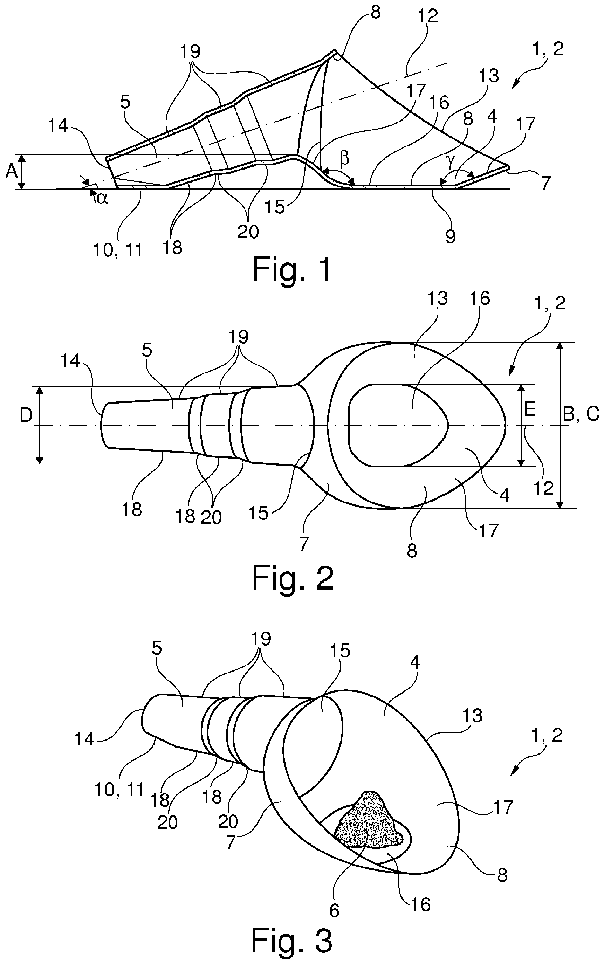

Figur 1 zeigt einen Schnitt durch eine erfindungsgemässe Wägehilfe 1 in Einfüllposition 2. Man erkennt die zwei Haupteile der Wägehilfe 1, das Aufnahmegefäss 4 und den Hals 5. Das Aufnahmegefäss 4 weist die Form einer Schale auf und umfasst eine Aufnahmegefässinnenseite 8 und eine Aufnahmegefässaussenseite 7. Die Aufnahmegefässaussenseite 7 weist eine Auflagefläche 9 auf. Die Auflagefläche 9 ist flach und dient dazu, die Wägehilfe 1 auf einer flachen Fläche, beispielweise einem Tisch oder einer Waage, aufzulegen. Die Aufnahmegefässinnenseite 8 besteht aus einem Boden 16 und aus einer um dem Boden 16 umkreisenden Fläche 17. Auf der Schnittdarstellung von Figur 1 bildet der Boden 16 mit der umkreisende Fläche 17 die Winkel β und γ. Diese Winkel sind stumpf, d.h sie betragen mehr als 90°. So bilden der Boden 16 und die umkreisende Fläche 17 eine offene Aufnahmegefässinnenseite 8. Demnach wird das Spülen des Wägegutes 6 erleichtert. Der Boden 16 befindet sich im Wesentlichen in der Mitte des Aufnahmegefässes 4, ist im Wesentlichen flach und kann parallel zur Auflagefläche 9 ausgerichtet sein. Ins Aufnahmegefäss 4 deponiert der Benutzer ein Wägegut 6, wie beispielsweise eine chemische oder eine biologische Substanz. Das Wägegut 6 wird vom Benutzer durch eine Einfüllöffnung 13 eingeführt und auf den Boden 16 gelegt.

Das Aufnahmegefäss 4 ist mit dem Hals 5 verbunden. Der Hals 5 weist an einem Ende eine Durchflussöffnung 15 für den Durchfluss des Wägeguts 6 vom Aufnahmegefäss 4 in Abflussposition 3, und am anderen Ende eine Abflussöffnung 14 zum Abfluss des Wägeguts 6 aus der Wägehilfe 1. Der Hals 5 besteht aus drei konischen Abschnitten 19, die die Neigung von 1:10 aufweisen. 1:10 ist die Neigung des Normschliffs 22 eines Messkolbens 21. So sitzt der Hals 5 fest im Normschliff 22 des Messkolbens 21 und es wird eine stabile Lagerung ermöglicht. Die Anzahl Abschnitte 19 des Halses 5 dienen dazu, die Wägehilfe 1 für verschiedene Messkolbendurchmesser verwenden zu können. Dank den Stauchungsregionen 20 zwischen den Abschnitten 19 wird eine grössere Bandbreite von Durchmessern mit einer beschränkten Halslänge erzielt.

Das Aufnahmegefäss 4 ist mit der Durchflussöffnung 15 des Halses 5 verbunden. Die Achse 12 des Halses 5 bildet einen Winkel α mit der Ebene der Auflagefläche 9 in der Richtung der Abfüllöffnung des Halses 5. D.h. die Achse 12 des Halses 5 und die Auflagefläche 9 des Aufnahmegefässes 4 sind nicht parallel. Der Hals 5 liegt in Einfüllposition 2 auf einer Auflagefläche 10 auf und trägt zur Stabilität der Wägehilfe 1 in Einfüllposition 2 bei. Die Durchflussöffnung 15 des Halses 5 befindet sich auf einer Höhe A über dem Niveau des Bodens 16. Auf diese Art fliesst das Wägegut 6 in Einfüllposition 2 nicht durch den Hals 5.

Figur 2 zeigt eine Draufsicht der in Figur 1 dargestellten Wägehilfe 1. Die Einfüllöffnung 13 ist im Wesentlichen so breit wie das Aufnahmegefäss 4. In der Mitte der Einfüllöffnung 13 sind der Boden 16 und die umkreisende Fläche 17 ersichtlich. Die Breite E des Bodens 16 ist ungefähr die Hälfte der Breite B der Einfüllöffnung 13. Die Grösse der Einfüllöffnung 13 und ihre zentrierte Position in Bezug auf den Boden 16 zeigen, dass der Benutzer mit seinen Laborinstrumenten wie beispielsweise Löffel, Pinzette, Präpariernadel oder Spatel, das Wägegut 6 durch eine leichte Handhabung auf den Boden 16 legen kann.

Figur 3 zeigt eine Perspektivdarstellung der Wägehilfe 1 in Einfüllposition 2. Auf dem Boden 16 der Wägehilfe 1 liegt ein Wägegut 6.

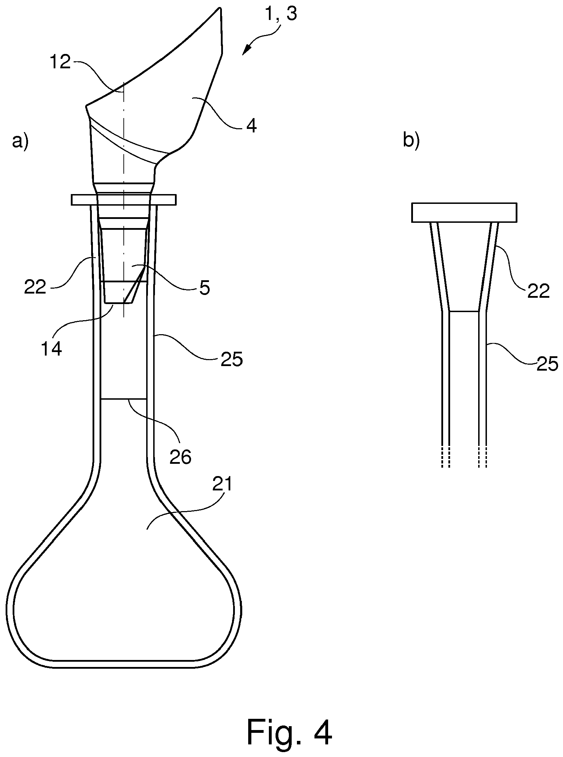

Figur 4 a) zeigt eine Wägehilfe 1 in Abflussposition 3. Der Hals der Wägehilfe 1 ist in einem Messkolben 21 eingeführt. Die Neigung der Abschnitte 19 des Halses 5 ist die gleiche wie die Neigung des Normschliff 22, 1:10, daher sitzt der Hals 5 formschlüssig im Normschliff 22. Die Abflussöffnung 14 ist tiefer als der Normschliff 22 angeordnet. Dies bedeutet, dass das Wägegut 6 in den Messkolben 21 fliesst, ohne in Kontakt mit dem Normschliff 22 zu kommen.

Figur 4b) zeigt eine vergrösserte Ansicht des Normschliffs 22 eines Messkolbens 21. Der Hals 25 des Messkolbens 21 ist zwar zylindrisch, der Normschliff 22 ist konisch und weist eine Neigung von 1:10 gemäss der DIN 12664 Norm auf.

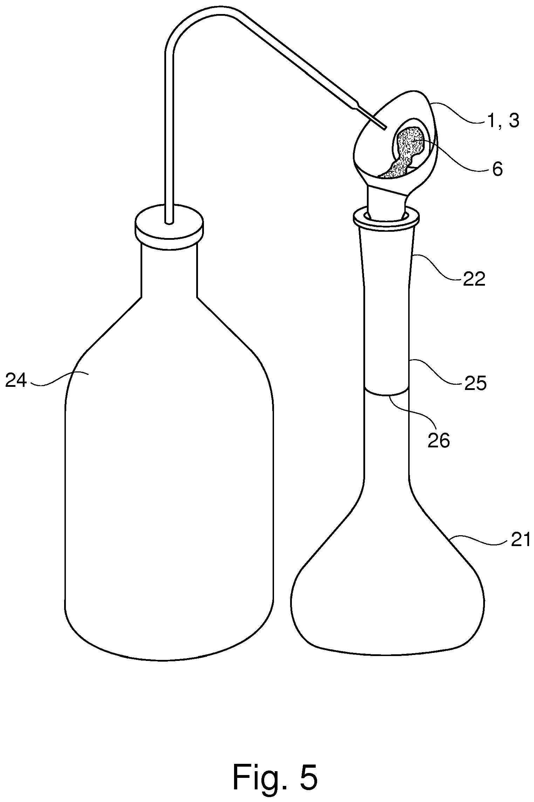

Figur 5 zeigt eine Perspektivdarstellung der in Figur 1 dargestellten Wägehilfe 1 in Abflussposition 3 in einem Messkolben 21 eingeführt. Auf dem Boden 16 der Wägehilfe 1 befindet sich das Wägegut 6, das Schwerkraft getrieben in den Hals 5 der Wägehilfe 1 fliesst. Links vom Messkolben 21 steht eine Spritzflasche 24. Damit wird ein Flüssigkeitsstrahl auf das Wägegut 6 gespritzt. Auf diese Art wird die Aufnahmegefässinnenseite 8 und vor allem der Boden 16 der Wägehilfe 1 gespült. Das bespritzte Wägegut 6 fliesst mit der Flüssigkeit durch den Hals 5 der Wägehilfe 1 in den Messkolben 21. Dieser Vorgang wird derart durchgeführt, dass möglichst wenige Reste vom Wägegut 6 auf der Wägehilfe 1 zurückbleiben, und möglichst viel vom Wägegut 6 in den Messkolben 21 fliesst. Auf dieser Figur ist ersichtlich, dass ein leicht nach hinten geneigter Boden 16 gut von der Spritzflasche 24 gespült werden kann. Idealerweise bespritzt die Flüssigkeit den Boden 16 der Wägehilfe 1 mit einem Winkel von 70°-90°. Die breite Einfüllöffnung B, 13 sowie die stumpfen Winkel β und γ der umkreisenden Fläche 17 ermöglichen einen guten Zugang des Flüssigkeitsstrahls zum Boden 16 und zur umkreisenden Fläche 17, und sichern somit minimale Rückstände des Wägeguts 6 in der Wägehilfe 1.

Bei der Ansicht der Figuren 1, 2 und 4, d.h. Schnittdarstellung, Draufsicht und Seitenansicht stellt man fest, dass die Neigung der tangentialen Ebenen der Wägehilfe 1 in jedem Punkt der Wägehilfe 1 stets die gleiche Polarität hat. Infolgedessen kann die Wägehilfe durch Spitzguss mit einer aus einem Stück bestehenden Form hergestellt, und aus der Form genommen werden, ohne dass sie Biegungen unterliegt.

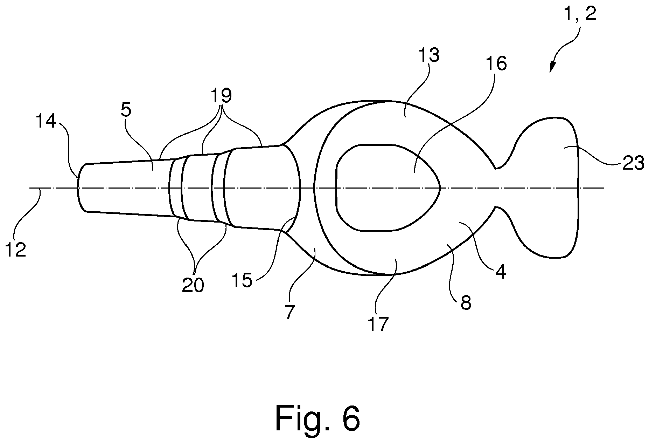

Figur 6 zeigt eine weitere erfindungsgemässe Wägehilfe 1 mit einem Griff 23. Der Griff 23 befindet sich in der Verlängerung des Aufnahmegefässes 4 an der gegenüberliegenden Seite der Abflussöffnung 14. Der Griff 23 erlaubt dem Benutzer die Wägehilfe 1 zu halten, ohne ihren Inhalt mit seiner Hand zu verdecken. So kann der Benutzer den Blick auf dem Wägegut 6 behalten während er die Wägehilfe 1 handhabt, bzw. vom Tisch auf die Waage und von der Waage in den Messkolben 21 bewegt. Zudem ist ein grosser Griff 23 bequemer zu halten und vermindert das Risiko mit Substanzen in Berührung zu kommen, was vor allem bei der Verwendung von toxischen Substanzen wichtig ist.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden.

### Bezugszeichenliste

- 1: Wägehilfe
- 2: Wägehilfe in Einfüllposition
- 3: Wägehilfe in Abflussposition
- 4: Aufnahmegefäss
- 5: Hals
- 6: Wägegut
- 7: Aufnahmegefässaussenseite
- 8: Aufnahmegefässinnenseite
- 9: Auflagefläche des Aufnahmegefässes
- 10: Auflagefläche des Halses
- 11: Auflagepunkt des Halses
- 12: Achse des Halses
- 13: Einfüllöffnung
- 14: Abflussöffnung
- 15: Durchflussöffnung
- 16: Boden
- 17: Umkreisende Fläche des Bodens
- 18: Verjüngung
- 19: Abschnitt des Halses
- 20: Stauchungsregion
- 21: Messkolben
- 22: Normschliff
- 23: Griff
- 24: Spritzflasche
- 25: Hals des Messkolbens
- 26: Volumenmarkierung
- α: Winkel zwischen der Auflagefläche und der Achse des Halses
- β,γ: Winkel zwischen dem Boden und der umkreisenden Fläche
- A: Höhe der Durchflussöffnung
- B: Breite der Einfüllöffnung
- C: Breite des Aufnahmegefässes
- D: Breite des Halses
- E: Breite des Bodens

## Patentansprüche

1. Wägehilfe (1) mit einem Aufnahmegefäss (4) und einem an dem Aufnahmegefäss (4) angeordneten Hals (5), die in Einfüllposition (2) das Einfüllen eines Wägeguts (6) ins Aufnahmegefäss (4) ermöglicht und in Abflussposition (3) das Abfliessen des im Aufnahmegefäss (4) befindlichen Wägeguts (6) durch den Hals (5) ermöglicht, wobei
- das Aufnahmegefäss (4) eine Aufnahmegefässaussenseite (7), eine in der Aufnahmegefässaussenseite (7) enthaltenen Auflagefläche (9) und eine Einfüllöffnung (13) zum Einfüllen eines Wägeguts (6) in Einfüllposition (2) aufweist, wobei in Einfüllposition (2) die Wägehilfe (1) auf der Auflagefläche (9) aufliegt,
der Hals (5) an einem ersten Ende eine Durchflussöffnung (15) zum Durchfluss des Wägeguts (6) vom Aufnahmegefäss (4) in Abflussposition (3), und an einem zweiten Ende einer Abflussöffnung (14) zum Abfluss des Wägeguts (6) aus dem Hals (5) in Abflussposition (3) aufweist, wobei der Hals (5) und das Aufnahmegefäss (4) derart miteinander verbunden sind, dass zwischen Einfüllposition (2) und Abflussposition (3) das Wägegut (6) vom Aufnahmegefäss (4) über die Durchflussöffnung (15) durch den Hals (5) fliessen kann,
**dadurch gekennzeichnet, dass**
der Hals (5) mindestens einen Auflagepunkt (11) in der gleichen Ebene wie die Auflagefläche (9) des Aufnahmegefässes (4) aufweist, so dass in der Einfüllposition (2) die Wägehilfe (1) auf der Auflagefläche (9) und dem mindestens einem Auflagepunkt (11) aufliegt, und dass das Aufnahmegefäss (4) eine Aufnahmegefässinnenseite (8) aufweist, dass die Aufnahmegefässinnenseite (8) einen Boden (16) zum Auflegen des Wägeguts (6) aufweist, dass um dem Boden (16) eine umkreisende Fläche (17) angeordnet ist, und dass der Boden (16) mit der umkreisenden Fläche (17) stumpfe Winkel (β, γ) bildet.

2. Wägehilfe (1) nach Anspruch 1, **dadurch gekennzeichnet, dass** der Hals (5) eine Auflagefläche (10) in der gleichen Ebene wie die Auflagefläche (9) des Aufnahmegefässes (4) aufweist, so dass in der Einfüllposition (2) die Wägehilfe (1) auf beiden Auflageflächen (9, 10) aufliegt.

3. Wägehilfe (1) nach einem der Ansprüche 1 bis 2, **dadurch gekennzeichnet, dass** die Auflagefläche (9) einen spitzen Winkel α mit der Achse (12) des Halses (5) in der Richtung des Halses (5) bildet.

4. Wägehilfe (1) nach einem der Ansprüche 1 bis 3, **dadurch gekennzeichnet, dass** die Neigung der tangentialen Ebenen in jedem Punkt der Fläche der Wägehilfe (1) in Bezug auf die Achse (12) des Halses (5) stets die gleiche Polarität hat, oder null ist.

5. Wägehilfe (1) nach einem der Ansprüche 1 bis 4, **dadurch gekennzeichnet, dass** das Aufnahmegefäss (C, 4) wesentlich breiter als der Hals (D, 5) ist.

6. Wägehilfe (1) nach einem der Ansprüche 1 bis 5, **dadurch gekennzeichnet, dass** die Einfüllöffnung (B, 13) im Wesentlichen so breit wie das Aufnahmegefäss (C, 4) ist.

7. Wägehilfe (1) nach Anspruch 1, **dadurch gekennzeichnet, dass** das Aufnahmegefäss (4) und die Durchflussöffnung (15) derart ausgestattet sind, dass die Durchflussöffnung (15) sich auf einer Höhe A über dem Niveau des Bodens (16) befindet, und dass dadurch das Wägegut (6) in Einfüllposition (2) nicht vom Aufnahmegefäss (4) durch den Hals (5) fliessen kann.

8. Wägehilfe (1) nach einem der Ansprüche 1 bis 7, **dadurch gekennzeichnet, dass** die Einfüllöffnung (13) derart ausgestattet ist, dass ihre Projektion auf der Ebene der Auflagefläche (9) im Wesentlichen den Boden (16) überlappt.

9. Wägehilfe (1) nach einem der Ansprüche 1 bis 8, **dadurch gekennzeichnet, dass** der Hals (5) konisch ist und eine Neigung von 1:10 beträgt, so dass der Hals (5) sich in Abflussposition (3) einem Normschliff (22) anschmiegen kann.

10. Wägehilfe (1) nach einem der Ansprüche 1 bis 9, **dadurch gekennzeichnet, dass** der Hals (5) mindestens zwei Abschnitte (19) aufweist, die eine Neigung von 1:10 und unterschiedliche Durchmesser aufweisen, so dass die Wägehilfe (1) in verschiedenen Normschliffgrössen stabil in Abflussposition (3) sitzen kann, wobei die mindestens zwei Abschnitte (19) durch eine Stauchungsregion (20) verbunden sind.

11. Wägehilfe (1) nach einem der Ansprüche 1 bis 10, **dadurch gekennzeichnet, dass** der Hals (5) mindestens eine Verjüngung (18) aufweist.

12. Wägehilfe (1) nach einem der Ansprüche 1 bis 11, **dadurch gekennzeichnet, dass** sie am Aufnahmegefäss (4) einen Griff (23) aufweist.

13. Verfahren zum Abfüllen eines Messkolbens (21) mit einem Wägegut (6) bestehend aus den folgenden Schritten:
- Einfüllen eines Wägeguts (6) in einer in Einfüllposition (2) angeordneten Wägehilfe (1) nach einem der Ansprüche 1 bis 12,
- Aufstellen der Wägehilfe (1) in Abflussposition (3) mit dem Hals (5) in der Öffnung eines Messkolbens (21), derart, dass das Wägegut (6) in den Messkolben (21) abfliesst.

## Claims

1. A weighing help (1) with a receptacle (4) and a neck (5) arranged on the receptacle (4), allowing the filling of a weighing good (6) into the receptacle (4) in the filling position (2) and allowing the outflow of the weighing good (6) contained in the receptacle (4) through the neck (5) in the outflow position (3), wherein
- the receptacle (4) has a receptacle outside (7), a bearing surface (9) contained in the receptacle outside (7) and a filling opening (13) for the infilling of a weighing good (6) in the filling position (2), wherein the weighing help (1) lies on the bearing surface (9) in the filling position (2),
the neck (5) has a throughflow opening (15) on a first end for the throughflow of the weighing good (6) from the receptacle (4) in the outflow position (3), and an outflow opening (14) on a second end for the outflow of the weighing good (6) out of the neck (5) in the outflow position (3), wherein the neck (5) and the receptacle (4) are connected to one another in such a way that the weighing good (6) can flow from the receptacle (4) through the neck (5) via the throughflow opening (15) between the filling position (2) and the outflow position (3),
**characterized in that**
the neck (5) has at least one bearing point (11) in the same plane as the bearing surface (9) of the receptacle (4), so that in the filling position (2), the weighing help (1) lies on the bearing surface (9) and the at least one bearing point (11), and **in that** the receptacle (4) has a receptacle inside (8), **in that** the receptacle inside (8) has a bottom (16) for the placement of the weighing good (6), **in that** a circumferential face (17) is arranged around the bottom (16), and **in that** the bottom (16) forms obtuse angles (β, γ) with the circumferential face (17).

2. The weighing help (1) according to claim 1, **characterized in that** the neck (5) has a bearing surface (10) in the same plane as the bearing surface (9) of the receptacle (4), so that the weighing help (1) lies on both bearing surfaces
(9, 10) in the filling position (2).

3. The weighing help (1) according to one of claims 1 to 2, **characterized in that** the bearing surface (9) forms an acute angle α with the axis (12) of the neck (5) in the direction of the neck (5).

4. The weighing help (1) according to one of claims 1 to 3, **characterized in that** the inclination of the tangent planes in every point of the face of the weighing help (1) always has the same polarity with regard to the axis (12) of the neck (5) or is zero.

5. The weighing help (1) according to one of claims 1 to 4, **characterized in that** the receptacle (C, 4) is substantially wider than the neck (D, 5).

6. The weighing help (1) according to one of claims 1 to 5, **characterized in that** the filling opening (B, 13) is substantially as wide as the receptacle (C, 4).

7. The weighing help (1) according to claim 1, **characterized in that** the receptacle (4) and the throughflow opening (15) are equipped such that the throughflow opening (15) is on a height A above the level of the bottom (16) and **in that** this leads to the weighing good (6) not being able to flow from the receptacle (4) through the neck (5) in the filling position (2).

8. The weighing help (1) according to one of claims 1 to 7, **characterized in that** the filling opening (13) is equipped such that its projection in the plane of the bearing surface (9) generally overlaps the bottom (16).

9. The weighing help (1) according to one of claims 1 to 8, **characterized in that** the neck (5) is conical and an inclination is 1:10, so that the neck (5) can adapt to a standard ground joint (22) in the outflow position (3).

10. The weighing help (1) according to one of claims 1 to 9, **characterized in that** the neck (5) has at least two sections (19) which have an inclination of 1:10 and different diameters, so that the weighing help (1) can stably sit in the outflow position (3) in different standard ground joints, wherein the at least two sections (19) are connected by a compression region (20).

11. The weighing help (1) according to one of claims 1 to 10, **characterized in that** the neck (5) has at least one tapering (18).

12. The weighing help (1) according to one of claims 1 to 11, **characterized in that** it has a grip (23) on the receptacle (4).

13. A method for filling a volumetric flask (21) with a weighing good (6), consisting of the following steps:
- filling a weighing good (6) into a weighing help (1) according to one of claim 1 to 12 and arranged in a filling position (2),
- putting up the weighing help (1) in the outflow position (3), with the neck (5) in the opening of a volumetric flask (21), such that the weighing good (6) flows into the volumetric flask (21).

## Revendications

1. Dispositif auxiliaire de pesage (1) comprenant un réceptacle (4) et un goulot (5) disposé sur le réceptacle (4), permettant de remplir le réceptacle (4) avec un produit à peser (6) en position de remplissage (2), et permettant l'écoulement du produit à peser (6) se trouvant dans le réceptacle (4) par le goulot (5) en position d'écoulement (3), dans lequel
- le réceptacle (4) présente un côté extérieur de réceptacle (7), une surface d'appui (9) contenue dans le côté extérieur de réceptacle (7), et une ouverture de remplissage (13) pour le remplissage d'un produit à peser (6) en position de remplissage (2), le dispositif auxiliaire de pesage (1) reposant sur la surface d'appui (9) en position de remplissage (2),
le goulot(5) présente une ouverture de passage (15) à une première extrémité pour le passage du produit à peser (6) à partir du réceptacle (4) en position d'écoulement (3), et une ouverture d'écoulement (14) à une deuxième extrémité pour l'écoulement du produit à peser (6) hors du goulot (5) en position d'écoulement (3), le goulot (5) et le réceptacle (4) étant reliés l'un à l'autre, de telle façon que le produit à peser (6) peut, entre la position de remplissage (2) et la position d'écoulement (3), s'écouler à travers le goulot (5) à partir du réceptacle (4) par l'ouverture de passage (15),
**caractérisé en ce que**
le goulot (5) présente au moins un point d'appui (11) dans le même plan que la surface d'appui (9) du réceptacle (4), de sorte que en position de remplissage (2), le dispositif auxiliaire de pesage (1) repose sur la surface d'appui (9) et l'au moins un point d'appui (11), et **en ce que** le réceptacle (4) présente un côté intérieur de réceptacle (8), **en ce que** le côté intérieur de réceptacle (8) présente un fond (16) destiné à recevoir le produit à peser (6), **en ce qu'**une surface périphérique (17) est disposée autour du fond (16), et **en ce que** le fond (16) forme un angle obtus (β, γ) avec la surface périphérique (17).

2. Dispositif auxiliaire de pesage (1) selon la revendication 1, **caractérisé en ce que** le goulot (5) présente une surface d'appui (10) dans le même plan que la surface d'appui (9) du réceptacle (4), de sorte qu'en position de remplissage (2), le dispositif auxiliaire de pesage (1) repose sur les deux surfaces d'appui (9, 10).

3. Dispositif auxiliaire de pesage (1) selon l'une des revendications 1 à 2, **caractérisé en ce que** la surface d'appui (9) forme un angle aigu α avec l'axe (12) du goulot (5) dans la direction du goulot (5).

4. Dispositif auxiliaire de pesage (1) selon l'une des revendications 1 à 3, **caractérisé en ce que** l'inclinaison des plans tangentiels présente toujours la même polarité en chaque point de la surface du dispositif auxiliaire de pesage (1) par rapport à l'axe (12) du goulot (5), ou est nulle.

5. Dispositif auxiliaire de pesage (1) selon l'une des revendications 1 à 4, **caractérisé en ce que** le réceptacle (C, 4) est nettement plus large que le goulot (D, 5).

6. Dispositif auxiliaire de pesage (1) selon l'une des revendications 1 à 5, **caractérisé en ce que** l'ouverture de remplissage (B, 13) est quasiment aussi large que le réceptacle (C, 4).

7. Dispositif auxiliaire de pesage (1) selon la revendication 1, **caractérisé en ce que** le réceptacle (4) et l'ouverture de passage (15) sont conçus de telle façon, que l'ouverture de passage (15) se trouve à une hauteur A au-dessus du niveau du fond (16), et **en ce que** le produit à peser (6) ne peut donc pas s'écouler à travers le goulot (5) à partir du réceptacle (4) en position de remplissage (2).

8. Dispositif auxiliaire de pesage (1) selon l'une des revendications 1 à 7, **caractérisé en ce que** l'ouverture de remplissage (13) est conçue de telle façon, que sa projection sur le plan de la surface d'appui (9) chevauche quasiment le fond (16).

9. Dispositif auxiliaire de pesage (1) selon l'une des revendications 1 à 8, **caractérisé en ce que** le goulot (5) est conique et présente une inclinaison de 1 : 10, de sorte que le goulot (5) peut se loger dans le joint rodé d'une fiole jaugée (22) en position d'écoulement (3).

10. Dispositif auxiliaire de pesage (1) selon l'une des revendications 1 à 9, **caractérisé en ce que** le goulot (5) présente au moins deux sections (19), lesquelles présentent une inclinaison de 1 : 10 et des diamètres différents, de sorte que le dispositif auxiliaire de pesage (1) peut se loger de façon stable dans différentes tailles de joint rodé de fiole jaugée en position d'écoulement (3), les au moins deux sections (19) étant reliées par une région de compression (20).

11. Dispositif auxiliaire de pesage (1) selon l'une des revendications 1 à 10, **caractérisé en ce que** le goulot (5) présente au moins un rétrécissement (18).

12. Dispositif auxiliaire de pesage (1) selon l'une des revendications 1 à 11, **caractérisé en ce que** celui-ci présente une poignée (23) sur le réceptacle (4).

13. Procédé pour le remplissage d'une fiole jaugée (21) avec un produit à peser (6), comprenant les étapes suivantes :
- remplissage d'un produit à peser (6) dans un dispositif auxiliaire de pesage (1) selon l'une des revendications 1 à 12, placé dans une position de remplissage (2),
- mise en place du dispositif auxiliaire de pesage (1) en position d'écoulement (3) avec le goulot (5) dans l'ouverture d'une fiole jaugée (21), de manière à ce que le produit à peser (6) s'écoule dans la fiole jaugée (21).
